(19) Europäisches Patentamt
European Patent Office
Office européen des brevets

(11) **EP 1 896 154 B1**

(12) **EUROPÄISCHE PATENTSCHRIFT**

(45) Veröffentlichungstag und Bekanntmachung des Hinweises auf die Patenterteilung:
**05.10.2011 Patentblatt 2011/40**

(51) Int Cl.:
***B01D 15/00*** (2006.01)

(21) Anmeldenummer: **06743111.4**

(22) Anmeldetag: **03.06.2006**

(86) Internationale Anmeldenummer:
**PCT/EP2006/005341**

(87) Internationale Veröffentlichungsnummer:
**WO 2006/131286 (14.12.2006 Gazette 2006/50)**

(54) **EIN CHROMATOGRAPHISCHES QUASI-KONTINUIERLICHES VERFAHREN UND ENTSPRECHENDE VORRICHTUNG ZUR TRENNUNG VON BINÄREN UND MEHRSTOFFGEMISCHEN**

A SEMI-CONTINUOUS CHROMATOGRAPHIC METHOD AND CORRESPONDING DEVICE FOR THE SEPARATION OF BINARY AND MULTI-COMPONENT MIXTURES

PROCEDE CHROMATOGRAPHIQUE QUASI CONTINU ET DISPOSITIF CORRESPONDANT DE SEPARATION DE MELANGES BINAIRES ET A PLUS DE DEUX CONSTITUANTS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.06.2005 DE 102005026486**

(43) Veröffentlichungstag der Anmeldung:
**12.03.2008 Patentblatt 2008/11**

(73) Patentinhaber: **Bayer Technology Services GmbH 51368 Leverkusen (DE)**

(72) Erfinder: **TOUMI, Abdelaziz 40229 Düsseldorf (DE)**

(56) Entgegenhaltungen:
**WO-A-01/87924    US-A- 5 139 680**

- **JENSEN T B ET AL: "Novel simulated moving-bed method for reduced solvent consumption" JOURNAL OF CHROMATOGRAPHY, ELSEVIER SCIENCE PUBLISHERS B.V. AMSTERDAM, NL, Bd. 873, Nr. 2, März 2000 (2000-03), Seiten 149-162, XP004202666 ISSN: 0021-9673**
- **HILBRIG F ET AL: "Continuous annular chromatography" JOURNAL OF CHROMATOGRAPHY B: BIOMEDICAL SCIENCES & APPLICATIONS, ELSEVIER, AMSTERDAM, NL, Bd. 790, Nr. 1-2, 25. Juni 2003 (2003-06-25), Seiten 1-15, XP004426785 ISSN: 1570-0232**

EP 1 896 154 B1

**Beschreibung**

Die vorliegende Erfindung betrifft ein chromatographisches quasi-kontinuierliches Verfahren zur Trennung von binären und Mehrstoffgemischen und die dazugehörige Vorrichtung.

Chromatographische Verfahren ermöglichen die Auftrennung bzw. Aufreinigung von chemischen, feinchemischen, biologischen und pharmazeutischen Produkten. Gegenüber anderen thermischen Trennverfahren weisen sie den besonderen Vorteil auf, dass sie bei moderaten und somit produktschonenden Temperaturen durchgeführt werden können (M. Juza, M. Mazzotti und M. Morbidelli, Trends in Biotechnology, 18, 2000, Seiten 108-118; S. Imamoglu, Advances in Biochemical Engineering/Biotechnology, 76, 2002, Seiten 211-231). In vielen Anwendungen, insbesondere im Life Science Bereich, können die darüber hinaus an die Endprodukte geknüpften hohen Reinheitsanforderungen oft nur mit Hilfe chromatographischer Verfahren erzielt werden (M. Schulte und J. Strube, Journal of Chromatography A 906, 2001, Seiten 399-416).

Weit verbreitet ist das so genannte Batch-Verfahren. Es ist besonders flexibel und technisch vergleichsweise einfach aufzubauen. In aufeinander folgenden Zyklen wird jeweils ein endlicher Puls des aufzutrennenden Stoffgemisches auf die chromatographische Säule aufgegeben. Danach wird mit einem oder mehreren Lösungsmitteln eluiert. Die unterschiedlichen Stoffkomponenten werden beim Durchströmen der chromatographischen Säule unterschiedlich stark adsorbiert, trennen sich infolgedessen auf und werden am Ausgang der Säule fraktioniert. Danach folgt eine Phase der Festbett-Regenerierung. Ein neuer Batch kann erst dann gestartet werden, wenn entweder der vorherige Batch beendet ist oder die am stärksten adsorbierbare Komponente des vorherigen Batches hinreichend weit gewandert ist, um nicht von der schwächer adsorbierbaren Komponente überholt zu werden. Das Batch-Verfahren benötigt daher in der Regel viel Zeit zur Aufreinigung einer gegebenen Produktmenge.

Neben der batchweisen Fahrweise existieren kontinuierliche Alternativen, die vornehmlich in der mittel- und großtechnischen Produktion ihren Einsatz finden (B. Clay, Chemical Market Report 259, 2001, Seite 15). Sie weisen in der Regel einen geringeren Lösungsmittelverbrauch auf und erlauben eine höhere Produktivität. Das Prinzip der kontinuierlichen Gegenstromchromatographie ist aus M. Negawa und F. Shoji, Journal of Chromatography 590, 1992, Seiten 113-117 bekannt. Geeignete Anlagen zur Durchführung der kontinuierlichen Gegenstromchromatographie wie insbesondere die so genannten Simulated Moving Bed (SMB)-Anlagen sind beispielsweise beschrieben in US 2,621,149 B; US 2,985,589 B und kommerziell erhältlich.

Dabei werden im Allgemeinen in einer SMB-Anlage mehrere Einzelsäulen zu einem geschlossenen Kreis verbunden. An einer Stelle im Kreis wird Feed zugeführt, welcher in der Regel ein binäres Gemisch (A+B) enthält. An einer weiteren Stelle im Kreis wird reines Lösungsmittel zugeführt. Das sich ergebende interne Konzentrationsprofil für das Stoffgemisch A+B stellt sich nach einer Anfahrphase ein. Die schwächer adsorbierende Komponente (A) wird im so genannten Raffinat-Auslass abgezogen, während die stärker adsorbierbare Komponente (B) im Extrakt-Auslass gewonnen wird. Beim Betrieb der SMB-Anlage werden die Einlässe und Auslasse über Ventile wie zum Beispiel Einzelventile, Mehrwegventile, Ventilblöcke, Klappen oder Rotationsventile, periodisch, aber nicht notwendigerweise gleichzeitig in Richtung der Flüssigkeitsströmung weitergeschaltet, so dass scheinbar eine Gegenstrombewegung von Flüssigkeitsstrom und stationärer Phase entsteht. Die im SMB-Prozess zwischen den jeweiligen Ein- und Auslassen identifizierten Zonen haben die folgenden Rollen im gesamten Trennprozess:

Zone I: Desorption der stark adsorbierbaren Komponente (A),

Zone II: Desorption der schwach adsorbierbaren Komponente (B),

Zone III: Adsorption der stark adsorbierbaren Komponente (A),

Zone IV: Adsorption der schwach adsorbierbaren Komponente (B).

In der Patentliteratur findet man eine Reihe von Weiterentwicklungen des Simulated Moving Bed Verfahrens, hauptsächlich mit dem Ziel bessere Trennleistungen zu erzielen und/oder das Verfahren auf Mehrstofftrennungen zu erweitern.

Im Patent US 6,712,973 B wird z.B. eine asynchrone Schaltung der Zu- und Abfuhrstellen vorgenommen, wodurch sich zusätzliche Freiheitsgrade zur Beeinflussung der mittleren Zonenlängen ergeben. Im Patent US 5,102,553 B ist eine Fahrweise patentiert, bei der die Volumenströme während einer Schaltperiode verändert werden können, wodurch die Produktentnahme sowohl im Extrakt als auch im Raffinat besser an den zeitlichen Verlauf des axialen Konzentrationsprofils angepasst werden kann. H. Schramm, M. Kaspereit und A. Seidel-Morgenstern, Journal of Chromatography A 1006, 2003, Seiten 77-86 schlagen darüber hinaus eine Modulation der Feedkonzentrationen vor, die zu einer deutlichen Steigerung der Produktivität führt. Der wirtschaftliche Vorteil gegenüber der konventionellen SMB-Fahrweise wird in diesem Falle jedoch stark von den Löslichkeitsgrenzen des Stoffgemisches im Eluent beschränkt. US Patent 6,602,420 B beschreibt schließlich eine Methode zur Aufreinigung von Saccharose mithilfe des SMB-Verfahrens, bei der der so genannte "Displacement" Effekt ausgenutzt wird. Der "Displacement" Effekt beschreibt hierbei die Eigenschaft der Komponenten hochkonzentrierter Lösungen, infolge von Wechselwirkungsmechanismen sich gegenseitig verdrängen zu können, woraus ein zusätzlicher Trenneffekt resultiert.

Weitere in der Patentliteratur bekannte Verfahren sind ISMB und SSMB. Im so genannten Improved SMB-Prozess (ISMB) wird im Hauptunterschied zum konventionellen SMB-Prozess die Zu- und Abfuhr vom Recycling entkoppelt (D. Costesson, G. Rearick und M. Kearne, Zuckerindustrie 125, 2000, Seiten 333-335). Nachdem die Zufuhr von Feed und Eluent und die Abfuhr von Raffinat und Extrakt erfolgt sind, findet ein reines Recycling statt. Anschließend werden die Ports synchron eine Säule weiter in Strömungsrichtung geschaltet. Der Energiebedarf der Recycling-Phase ist ein dominierender Faktor in den Gesamtkosten großtechnischer Anlagen. Dies kann im ISMB-Prozess reduziert werden, da die Recycling-Pumpe nicht permanent fördert (F. Lutin, M. Bailly und D. Bar, Desaltination 148, 2002, Seiten 121-124). Der Sequential SMB-Prozess (SSMB) ist für die Gewinnung von mehreren Fraktionen eines Stoffgemisches konzipiert und wird ausschließlich in der Zuckerindustrie eingesetzt (S. Baudouin und X. Lancrenon, Industries Alimentaires et Agricoles, 120, 2003, Seiten 42-48). Ähnlich dem SMB-Prozess sind mehrere Säulen in einem geschlossen Kreis angeordnet. Im Gegensatz zur konventionellen SMB-Fahrweise gestaltet sich die Zu- und Abfuhr in diskontinuierlicher Weise. Darüber hinaus kann Feed an mehreren Stellen im Kreis zugeführt werden. Die Produktströme können ebenfalls jederzeit am Ausgang jeder Säule aufgesammelt werden. Das Recycling unreiner Fraktionen kann entweder in der gleichen oder in einer benachbarten. Säule erfolgen. SSMB entspricht einer intelligenten Anordnung mehrerer Batch-Säulen, ist im Grunde genommen ein diskontinuierliches Verfahren und nutzt nur teilweise die Vorteile eines simulierten Gegenstroms. Darüber hinaus resultiert ein komplexes Scheduling-Problem, welches für den optimalen Betrieb solcher Anlagen gelöst werden muss.

In der Patentschrift US 6,805,799 wird eine neue Fahrweise "SMB-Focusing" vorgestellt, mit deren Hilfe Mehrstoffgemische in einer "SMB-Antage" aufgetrennt werden können. Hierbei wird ein Gradientenprofil erreicht, indem Unterschiede z.B. in Salzgehalt oder pH-Wert von Zone zu Zone eingestellt werden. Dadurch soll am Ausgang jeder Zone nur eine Komponente eluieren. Feed wird in der ersten Zone aufgegeben und die Komponenten werden sukzessive entsprechend ihrer Elutionskraft in den jeweiligen Zonen gewonnen. Ähnlich dem SSMB-Prozess wird hier der Gegenstromeffekt nicht ausgenutzt. Dieser Aufbau entspricht vielmehr einem gekoppelten Betrieb mehrerer Batch-Säulen. Die Anwendung dieser Fahrweise beschränkt sich auf Trennprobleme, bei denen eine zusätzliche äußere Einflussgröße z.B. (Salzgehalt oder pH-Wert) auf die Trennwirkung gefunden werden kann. Darüber hinaus muss ein signifikanter Gradient gebildet werden.

Der konventionelle SMB-Prozess sowie alle bisher bekannten kontinuierlichen Erweiterungen (VARICOL, PowerFeed, ModiCon, ISMB, etc.) können prinzipbedingt nur für binäre Trennaufgaben eingesetzt werden. Selbst die Gewinnung einer Komponente aus einem Gemisch ist nur möglich, wenn letztere die am stärksten oder am schwächsten adsorbierbare Komponente ist. Dies ist ein Nachteil gegenüber der Batch-Fahrweise, die somit einen flexibleren Betrieb ermöglicht. Das ist der Grund, weshalb der Hauptanteil industrieller Anwendungen in Batch-Fahrweise erfolgt.

Aufgrund der Tatsache, dass der konventionelle SMB-Prozess ein Mehrstoffgemisch nur in zwei Fraktionen aufteilen kann, erfordert deren Anwendung auf Mehrstofftrennungen die Nutzung mehrerer SMB-Anlagen, die zum Beispiel in einer Kaskade angeordnet werden. Patent US 6,602,420 B beschreibt zum Beispiel die industrielle Gewinnung von Saccharose mit einer Kaskade aus zwei SMB-Anlagen. Dies bedeutet jedoch ein beachtliches Investitionsvolumen. Wirtschaftlich günstiger ist der Betrieb einer einzigen SMB-Anlage, worin die einzelnen Trennschritte zeitlich nacheinander durchgeführt werden, bis das Mehrstoffgemisch in seine einzelnen Bestandteile aufgetrennt ist. Allerdings ist dies mit einem hohen Produktions- und Zeitaufwand verbunden. In diesem Falle verliert die SMB-Technologie jedoch gegenüber der Batch-Fahrweise die bisher gepriesenen Vorteile bezüglich Produktivität und Lösungsmittelverbrauch.

Neben der Batch-Chromatographie hat sich bei der Trennung von Mehrstoffgemischen auch die so genannte annulare Chromatographie etabliert (Finke et al., J. Agric. Food Chem., 50, 2002, Seiten 185-201; F. Hilbrig, Journal of Chromatography B, 790, 2003, Seiten 1-17). Bei der annularen Chromatographie wird der Feed ortsfest auf eine rotierende Säule zugeführt, während auf den restlichen Umfang Eluent aufgegeben wird. Durch die Rotation der chromatographischen Säule entstehen Bänder, die an unterschiedlichen Winkeln austreten. Somit lässt sich ein Mehrstoffgemisch in seine einzelne Bestandteile auftrennen. In der annularen Chromatographie erfolgt die Trennung trotz der radialen Bewegung hauptsächlich in axialer Richtung. Daher entspricht die annulare Chromatographie einem Batch-Verfahren mit vielen kreisförmig angeordneten Säulen. Dabei werden deutlich hohe Mengen an Lösungsmittel benötigt. Schwierigkeiten beim Verteilen der Lösung auf den Kopf sowie die Aufsammlung der Produkte am Boden einer CAC-Einheit (continuous annular chromatography) sind bekannt und eine gleichmäßige Zu- und Abfuhr der Stoffkomponenten auf eine rotierende Säule stellen eine ingenieurtechnische Herausforderung dar, die bisher für eine große Anlage mit entsprechend hohem Durchsatz nicht zufriedenstellend gelöst werden konnte. Vorteilhaft ist jedoch die Möglichkeit, ein Mehrstoffgemisch kontinuierlich aufzutrennen.

Die Patentschrift US5139680 offenbart ein zweidimensionales Verfahren zur chromatographischen Trennung von mehreren Komponenten. In dem Verfahren wird eine Mehrzahl von Adsorbentien benutzt, die schichtweise angeordnet sind. Es werden anisotrope Adsorbentienbetten offenbart, wobei die zu trennende Mischung sukzessive eine Richtung X und eine senkrecht dazu verlaufende Richtung Y eluiert.

Ausgehend vom beschriebenen Stand der Technik bestand die Aufgabe, ein quasi-kontinuierliches Verfahren zur Trennung von mehreren Komponenten zur Verfügung zu stellen, bei welchem die Vorteile des SMB-Verfahrens, d.h. der kontinuierlichen Trennung, und die Vorteile der annularen Chromatographie, d.h. Trennung von mehr als 3 Komponenten, kombiniert werden. Weiterhin bestand die Aufgabe darin, eine Vorrichtung bereitzustellen, mit der das quasi-kontinuierliches Verfahren ausgeführt werden kann.

Erfindungsgemäß wird diese Aufgabe durch die Gegenstände der unabhängigen Ansprüche 1 und 5 gelöst. Bevorzugte Ausführungsformen finden sich in den abhängigen Ansprüchen.

Ein Gegenstand der vorliegenden Erfindung ist daher ein chromatographisches quasi-kontinuierliches Verfahren zur Trennung von binären und Mehrstoffgemischen in einer Anlage, die aus mehreren seriell im Kreis geschalteten Einzelsäulen $S_1$ bis $S_N$ besteht, dadurch gekennzeichnet, dass eine zweidimensionale Trennung dadurch erreicht wird, dass

a) im Schritt 1 der Periode p, einer Säule $S_m$ Feed und den anderen Säulen ein Eluentenstrom in Richtung Y zugeführt wird,

b) im Schritt 2 der Periode p, ein Eluentenstrom durch die gebundenen Säulen in Richtung X fließt und einen so genannten Kreisstrom bildet,

c) im Schritt 1 der Periode p+1, der Säule $S_{m+1}$ weiteres Feed und den anderen Säulen weiterer Eluentenstrom in Richtung Y zugeführt werden,

d) im Schritt 2 der Periode p+1, wieder ein Eluentenstrom durch die gebundenen Säulen in die Richtung X fließt und einen so genannten Kreisstrom bildet,

e) sich a) bis d) kontinuierlich wiederholen,

wobei X die Richtung darstellt, in der die Einzelsäulen miteinander verbunden sind und die Richtung Y senkrecht hierzu verläuft.

Das erfindungsgemäße Verfahren baut auf dem Prinzip der simulierten Gegenstromchromatographie auf. Überaschenderweise wurde durch Modifikation des SMB Prozesses, bei der die Stoffkomponenten ähnlich der annularen Chromatographie auf diagonale Bänder wandern, erreicht, dass diese Stoffkomponenten in einem einzigen Apparat aufgetrennt werden können. Das erfindungsgemäße Verfahren kombiniert außerdem die Batch Fahrweise mit der SMB-Technologie, welche eine quasi-kontinuierliche Trennung von Mehrstoffgemischen ermöglicht. Aufgrund dieser Kombination profitiert das neue Verfahren sowohl von der Flexibilität des Batch-Verfahrens als auch von der höheren Produktivität und geringerem Lösungsmittelverbrauch des SMB-Verfahrens. Darüber hinaus wird gegenüber der üblichen Batch-Fahrweise das Adsorbens besser ausgenutzt. Ein Prozessführungskonzept ist hierfür einfacher zu realisieren als im Falle des konventionellen SMB-Verfahrens. Das erfindungsgemäße Verfahren eignet sich für die Trennung von binären Gemischen und vermag somit den konventionellen SMB-Prozess zu ersetzen. Es kann außerdem im Gegensatz zum herkömmlichen SMB-Prozess auch zur Trennung von Mehrstoffgemischen eingesetzt werden.

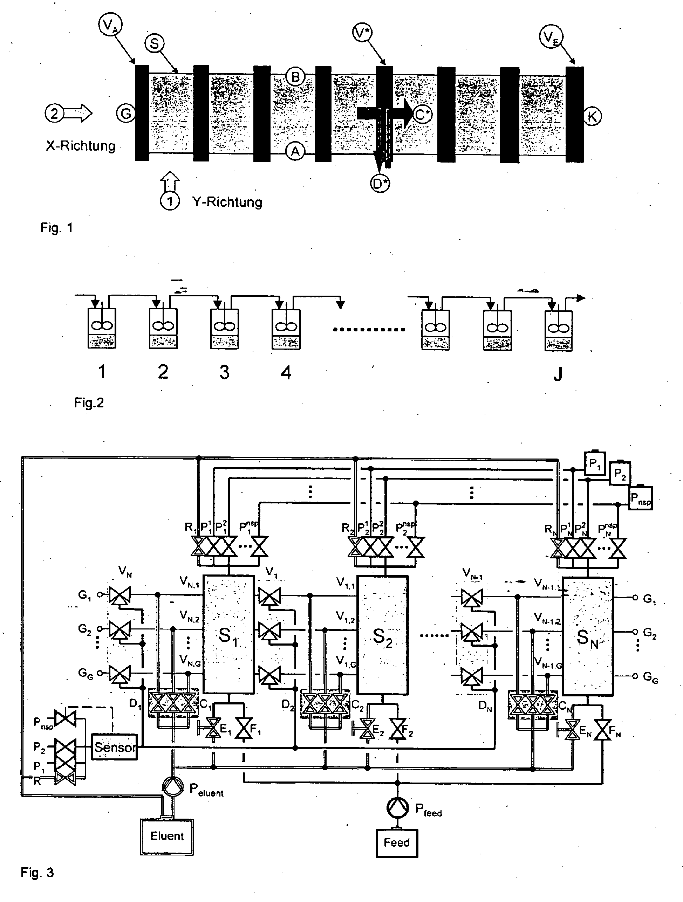

Eine besondere Ausführungsform des erfindungsgemäßen Verfahrens wird anhand der Fig.1 erläutert.

Die Fig.1 zeigt die Basiselemente einer Vorrichtung für das erfindungsgemäße Verfahren, ohne sich darauf zu begrenzen.

Mehrere chromatographische Säulen (S*), mindestens 2, vorzugsweise 3 bis 12, werden in Reihe geschaltet. In radialer Y-Richtung (1) wird der Boden entlang der kompletten Breite beaufschlagt und bildet die Säulenzufuhr (A*), gegenüber befindet sich die Säulenabfuhr (B*). Jede Säule ist mit einem speziellen Verteiler (V*), der eine Verteilerzufuhr (C*) und eine Verteilerabfuhr (D*) aufweist, an die Nachbarsäule in Richtung X verbunden. Der chromatographische Kreis wird geschlossen, indem das Ende der letzten Säule mit dem Anfang der ersten Säule, durch einen Verteiler $V_A$ verbunden wird. Alternativ wird das Ende der letzten Säule mit dem Anfang der ersten Säule durch zwei Verteiler $V_E$ um die Leitung K in der Reihefolge $V_E$-K-$V_A$ verbunden.

Die chromatographischen Säulen (S*) weisen, wie eine SMB-Säule in der X-Richtung, zwei seitliche Fritten und Filter auf. Zusätzlich ermöglichen in der Y-Richtung zwei weitere Fritten und Filter den Strom in der Y-Richtung. Jede Säule ist mit einer stationären Phase gefüllt, die je nach Trennproblem eine normale, reversed, chirale, Ionenaustausch- oder Polymer-Phase sein kann. Sie werden vorzugsweise folgendermaßen gepackt: die unteren sowie die seitlichen Fritten und Filter werden zunächst eingebaut, die Feststoffphase wird von oben bevorzugt im Slurry-Verfahren aufgefüllt und durch einen hydraulisch angetriebenen Stempel oder einen Flüssigkeitsstrahl komprimiert. Danach werden die obere Fritte und der Filter eingebaut.

In der Periode p wird im Schritt 1 (=Injektionsphase) Feed in die Säule $S_m$ durch die Feed Zufuhr $A_m$ zugeführt, alle andere Säulen erhalten frisches Eluent. Alle Verteiler (V*) sind dabei in X-Richtung geschlossen, so dass die aufgegebene Flüssigkeit die Säule (S*) an der Säulenabfuhr (B*) verlässt. Die Abfuhr (B*) jeder Säule kann hierbei über Fraktionierventile mit allen Produktbehälter verbunden werden. Während der Injektionsphase kann der Volumenstrom jeder Säule unabhängig voneinander eingestellt werden. In dieser Richtung wird das Verfahren im Grunde genommen als Batch-Verfahren betrieben. Hier sollten die Volumenströme so eingestellt werden, dass die jeweilige Zielkomponente in der gewünschten Reinheit und Ausbeute gewonnen wird.

Im zweiten Schritt wird entlang der X-Richtung (2) getrennt, indem frisches Lösungsmittel an der Verteilerzufuhr ($C_n$) eines gegebenen Verteilers ($V_n$) zugeführt wird, wobei üblicherweise m ≥ n ist. An der Verteilerabfuhr ($D_n$) des gleichen Verteilers ($V_n$) wird der Kreisstrom abgeführt. $V_n$ ist in X-Richtung zu; alle anderen Verteiler (V*) sind in X-Richtung offen und ermöglichen somit einen Kreisstrom durch alle Säulen. Das gesamte Konzentrationsprofil wird in X-Richtung gefördert.

An der Verteilerabfuhr ($D_n$) können sich zwei Situationen ergeben:

1. entweder tritt reines Lösungsmittel aus, welches weiterverwendet werden kann,

2. oder es treten die am leichtesten adsorbierbaren Komponenten auf, welche in die entsprechenden Produktbehälter geleitet werden können.

Dieses Verfahren entspricht somit einer geschickten Kombination der SMB- und Batch-Fahrweise in einem einzigen Apparat, wobei beide Fahrweisen sozusagen abwechselnd durchlaufen werden. Die Stoffkomponenten wandern, wie die folgenden Illustrationen zeigen, ähnlich der annularen Chromatographie auf unterschiedliche Querbahnen. Die Trennung erfolgt hierbei entlang von zwei Koordinaten, was ein grundsätzlicher Unterschied zur annularen sowie zu den bisher bekannten traditionellen chromatographischen Verfahren darstellt. Es handelt sich um ein echt zweidimensionales chromatographisches Verfahren. Die Trajektorie, entlang derer die Bahnen der verschiedenen Komponenten sich bilden, kann dabei durch die in radialer und axialer Richtung eingestellten Volumenströme beeinflusst werden.

Es ist Aufgabe der Prozessauslegung, abhängig vom vorliegenden Stoffgemisch sowie dessen thermodynamischen Eigenschaften, den Trennprozess so zu gestalten, dass nur die jeweils gewünschte Komponente am oberen Ausgang (B*) einer gegebenen Säule (S*) gewonnen werden kann. Die Trennung in axialer Richtung X ähnelt dem konventionellen SMB-Prozess, wobei sie ohne Zufuhr von Feed stattfindet. Deshalb kann dieser Schritt im Vergleich zum konventionellen SMB-Prozess relativ einfach ausgelegt werden. Der Volumenstrom kann so eingestellt werden, dass am Ende der Periode die mit frischem Eluent beaufschlagte Säule ($S_n$) vollkommen regeneriert wird, d.h. dass nur reines Lösungsmittel die Säule verlässt.

Die richtigen Werte für die Volumenströme werden anhand einer modellbasierten Auslegungsrechnung oder experimentell ermittelt.

Um das dynamische Verhalten dieses Prozesses verstehen und analysieren zu können, wurde das folgende mathematische Modell aufgebaut. Jede Säule wird sowohl in axialer als auch radialer Richtung in Stufen aufgeteilt, in denen ein thermodynamisches Gleichgewicht zwischen flüssiger und fester Phase angenommen wird. Dieses Stufenmodell (plate model), welches in Fig. 2 in axialer Richtung graphisch dargestellt wird, gibt sehr gut das dynamische Verhalten chromatographischer Trennungen wieder und ermöglicht eine realitätsnahe Studie der dynamischen Eigenschaften. Die Anzahl der Stufen ist ein Maß für die hydrodynamische Effizienz und wird anhand der Van-Deemter Gleichung ermittelt (Guiochon, G. 2002 , Journal of Chromatography A, 965, 129-161):

$$J\{,K\} = \frac{B\{,H\}}{\text{HETP}}, \text{HETP} = A + Bu \text{ und } u = \frac{Q}{A\varepsilon_{ext}}.$$

HETP ist die Height Equivalent to Theoretical Plate, ein Maß für die fluiddynamische Effizienz einer chromatographischen Säule, und wird experimentell anhand von Pulsversuchen ermittelt.

Folgende Gleichung ergibt sich in axialer X-Richtung, wenn man die Massenbilanz um eine Stufe betrachtet:

$$C_i^{j-1,k} = C_i^{j,k} + \frac{T_0^J}{J}\frac{\partial C_i^{j,k}}{\partial t} + \frac{1-\varepsilon_{ext}}{\varepsilon_{ext}}\frac{T_0^J}{J}\frac{\partial \overline{C}_i^{j,k}}{\partial t}, \quad i = 1,\cdots,n_{sp}; j = 1,\cdots,J; k = 1,\cdots,K$$

Analog hierzu kann folgende Gleichung in radialer Y-Richtung aufgestellt werden:

$$C_i^{j,k-1} = C_i^{j,k} + \frac{T_0^K}{K}\frac{\partial C_i^{j,k}}{\partial t} + \frac{1-\varepsilon_{ext}}{\varepsilon_{ext}}\frac{T_0^K}{K}\frac{\partial \overline{C}_i^{j,k}}{\partial t}, \quad i = 1,\cdots,n_{sp}; \; j = 1,\cdots,J; \; k = 1,\cdots,K$$

$C_i^{j,k}$ beschreibt hierbei die Konzentration in der Flüssigphase der Komponente *k* in der (i,j)-Stufe, wobei i die horizontale Position (axiale X-Richtung) und j die vertikale Position (radiale Y-Richtung) wiedergibt. $\overline{C}_i^{j,k}$ ist wiederum die entsprechende Konzentration in der Feststoffphase, $n_{sp}$ entspricht der Anzahl an Komponenten. Zwischen der Flüssig- und Feststoffphase herrscht ein Adsorptionsgleichgewicht, welches allgemeingültig durch die folgende, so genannte Isothermengleichung, beschrieben wird:

$$\overline{C}_i^{j,k} = f(C_1^{j,k}, C_2^{j,k}, \cdots, C_{n_{sp}}^{j,k}),$$

Viele Stofftrennungen folgen einem linearen Adsorptionsgesetz. Dies ist insbesondere der Fall bei stark verdünnten Lösungen. Sie werden durch die so genannten Henry-Koeffizienten charakterisiert:

$$\overline{C}_i^{j,k} = H_i C_i^{j,k}.$$

$T_0$ ist die Retentionszeit und entspricht der von einer nicht adsorbierbaren Substanz benötigten Zeit, die chromatographische Säule in die jeweilige axiale oder radiale Richtung zu durchlaufen. $\varepsilon_{ex1}$ beschreibt schließlich die Porosität der Packung.

Dieses Modell beschreibt chromatographische Trennungen sehr gut, wie in vielen Publikationen eindrucksvoll illustriert wurde (u.a. Ludemann-Hombourger, O. und Nicoud, R.-M, 2000, Separation Science and Technology, 35, 1829-1862). Das mathematische Modell kann zusätzlich dazu dienen, den Prozess auszulegen.

Ob sich die eine oder andere Betriebsweise ergibt, hängt von der Wahl der Volumenströme sowie der Adsorptionseigenschaften der zu trennenden Komponente ab.

Die Säulen (S*) werden in zwei unterschiedliche Richtungen, vorzugsweise zueinander senkrechte Richtungen X (2) und Y (1), durchströmt.

Die Säulen können geometrisch entweder als zylindrische Teilringe (bei 2 Säulen ergeben sich Halbringe), oder quadratische Platten gestaltet werden. Wenn die Säulen Teilringe sind, dann entfällt der letzte Verteiler $V_E$, da das Ende der letzten Säule mit dem ersten Verteiler $V_A$ direkt verbunden werden kann, wodurch sich ein zylindrischer Gesamtaufbau ergibt. Für den Hochdruckbereich, von 20 bis 200 bar, werden zylindrische druckfeste Formen bevorzugt, während im Niederdruckbereich quadratische Säulen ihren Einsatz finden können.

Zwischen den Säulen befinden sich in axialer X-Richtung die Verteiler (V*), die folgende Funktionen erfüllen:

1. Das radiale Konzentrationsprofil, welches in einer chromatographischen Säule (S*) entlang der Y-Richtung (1) entsteht, soll beim Durchströmen der Säule in X-Richtung (2), an die Nachbarsäule ohne große Vermischungseffekte transportiert werden können.

2. Jeder Verteiler (V*) soll beim Durchströmen der Säulen in X-Richtung (2) sowohl die Zufuhr eines frischen Eluentenstromes (durch C*) in den Kreisstrom als auch die Abfuhr des Kreisstromes (durch D*) erlauben.

3. Die Verteiler (V*) sollen beim Durchströmen der Säulen in Y-Richtung (1) die chromatographischen Säulen hydrodynamisch voneinander abtrennen (Kreisstrom und D* geschlossen), so dass jede Säule mit einem eigenen definierten radialen Volumenstrom beaufschlagt werden kann.

Die Fig. 3 zeigt eine besondere Ausführungsform der Vorrichtung mit gesamtem Aufbau des gesamten Systems samt Peripherie, bestehend aus Pumpen, Ventilen und Behältern.

N-Säulen sind in Reihe geschaltet. Ferner wird von einem allgemeinen Mehrstoffgemisch mit nsp-Komponenten (nsp ≥ 2) ausgegangen. Jede Säule wird entlang der radialen Y-Richtung in äquidistante bzw. in graduell feinere G-Bereiche aufgeteilt. Der Verteiler verbindet jeden G-Bereich g der Säule m mit dem G-Bereich g der Säule m+1, so dass das Konzentrationsprofil von der Säule m auf die Säule m+1 weitergeleitet wird. In jedem Bereich wird die Flüssigkeit aufgesammelt, anschließend durch eine Kombination von Sperrventilen (v*), die den Verteiler V* bilden, entweder auf die folgende Säule oder auf die Verteilerausfuhr (D*) geleitet. Dem Kreisstrom kann über die Verteilerzufuhr (C*), ein einfaches Ventil, frisches Eluent hinzugeführt werden. Der Eluent am Ausgang des Verteilers (D*) wird möglichst wieder verwendet, wobei er optional mit Hilfe eines Detektors analysiert und entsprechend fraktioniert werden kann.

In radialer Y-Richtung wird Feed oder Eluent auf die unteren Eingänge der Säulen aufgegeben. Hierbei kann der Feed auf mehrere Säulen gleichzeitig geleitet werden. Vorzugsweise wird Feed auf eine Säule aufgegeben, so dass reine Schaltventile ($F_1$-$F_N$) verwendet werden. Im Gegensatz hierzu werden Regelventile für den Eluenten-Eingang ($E_1$-$E_N$) vorgesehen, womit der Eluenten-Volumenstrom in radialer Y-Richtung jeder Säule unabhängig voneinander vorgegeben werden kann. Alternativ können an Stelle der Regelventile für den Eluenten-Zulauf Förderpumpen eingesetzt werden. Der Ausgang der Säule kann entweder über die Fraktionierventile $P^1$-$P^{nsp}$ in einen der Produktbehälter geleitet werden oder anhand R in den Eluenten-Behälter zugeführt werden. Ein Waste-Behälter kann zusätzlich vorgesehen werden, um falsche Schnittfraktionen zu verwerfen (in Fig. 3 aus Übersichtsgründen nicht gezeichnet).

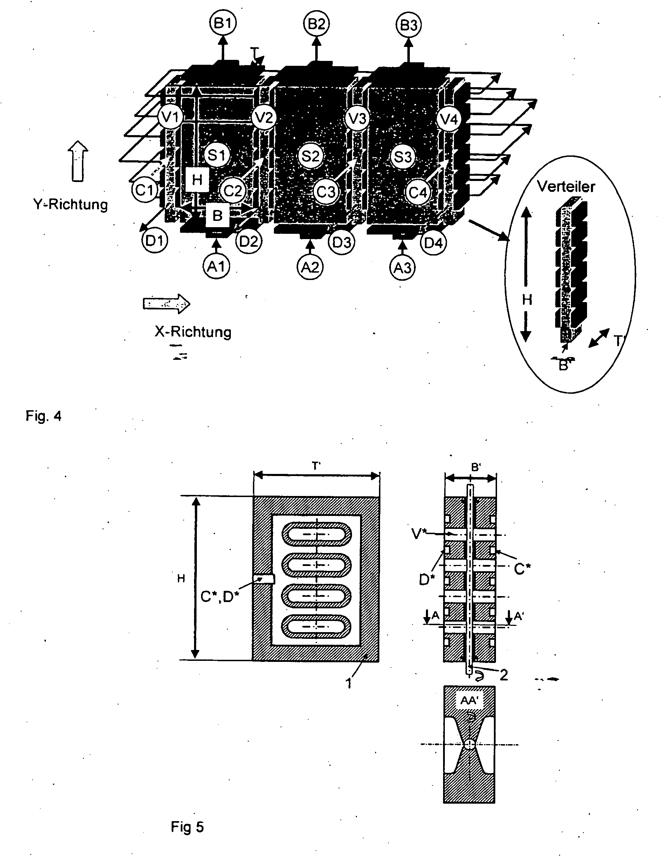

Die Fig. 4 zeigt eine weitere Darstellung der erfindungsgemäßen Vorrichtung mit insgesamt drei chromatographischen Säulen. Die Anschlüsse sind ebenfalls gekennzeichnet. Die chromatographischen Säulen $S_1$-$S_3$ weisen eine quadratische oder Teilring-Form auf, mit der Breite B, der Höhe H und der Tiefe T. In radialer Y-Richtung sind die Säulenzufuhren $A_1$-$A_3$ sowie die Säulenabfuhren $B_1$-$B_3$ zu finden. An den Säulenzufuhren wird mithilfe eines Zweiwegeventils jeweils Eluent oder Feed zugeführt. Die Säulenabfuhren $B_1$-$B_3$ werden mittels Fraktionierventilen auf die entsprechenden Ausgangsbehälter geschaltet. Bei einem Dreistoffgemisch mit drei Behältern eignen sich Dreiwegeventile. Ferner befinden sich zwischen den Säulen, in axialer X-Richtung, die Verteiler $V_1$-$V_4$. Die Verteiler unterteilen wie in Fig. 3 die Säulen in G-Bereiche und werden direkt an den Säulen befestigt. Fig. 4 zeigt exemplarisch eine Unterteilung in sechs Bereiche. Hierbei wird das radiale Strömungsprofil, welches bei der Durchströmung in X-Richtung entsteht, in Bereiche unterteilt, die von den Verteilern aufgesammelt und auf die nächste Säule verteilt werden. Gleichzeitig kann, wie in der Funktionsbeschreibung dargelegt, über die Anschlüsse $C_1$-$C_4$ frisches Lösungsmittel zugeführt werden. Über die jeweiligen Anschlüsse $D_1$-$D_4$ wird parallel hierzu ein Strom abgezogen.

Die Verteiler V* können entsprechend Fig. 3 mithilfe von Schaltventilen realisiert werden, mit dem Nachteil, dass neben der enormen Anzahl der erforderlichen Ventile auch viele Anschlüsse mit entsprechend hohem Holdup-Volumen entsteht.

In einer besonderen Ausführungsform werden die Verteiler V* als einzelne kompakte Bauteile gefertigt. Jeder Verteiler muss eine homogene Durchströmung ohne hohe Druckverluste ermöglichen, und insbesondere darf er das radiale Konzentrationsprofil nicht stark stören. In jeder Periode während der radialen Injektionsphase (Schritt 1), soll er die chromatographischen Bereiche voneinander trennen (X-Richtung geschlossen). In der axialen SMB-Trennphase (Schritt 2) hingegen, muss es möglich sein, über einen Verteiler Eluent in den Kreisstrom zuzuführen. Der zurücklaufende Strom soll an der gleichen Stelle abgeführt werden und eventuell wieder verwendet werden. Für das erfindungsgemäße Verfahren müssen alle Verteiler V* diese Funktionen erfüllen.

Dies wurde durch die in Fig. 5 dargestellte Konstruktion erreicht. Sie besteht aus zwei Bauteilen: einem Grundkörper (1) und einem rotierenden Zylinder (2). Im Verteiler-Grundkörper werden Wege für den Eluenten eingefräst, die jeweils die Verteilerabfuhr D* und -zufuhr C* bilden. In axialer Richtung sind im Grundkörper Kanäle vorgesehen, die durch einen rotierenden Zylinder zu- bzw. aufgemacht werden. Im Zylinder (2) sind nämlich auf der Höhe der Kanäle des Grundkörpers (1) Löcher zu finden. Dreht man den Zylinder (2), so können die Kanäle im Grundkörper (1) verbunden oder unterbrochen werden. Hierfür verengen sich die Kanäle in der Mitte hin zu einem zylindrischen Kanal (siehe Schnitt AA'), welcher durch den oben genannten Schließmechanismus nach Bedarf gesperrt wird.

**Figuren**

Die Fig. 1 bis 5 zeigen Vorrichtungen für das erfindungsgemäße Verfahren ohne sich darauf zu begrenzen.

Bezugszeichen:

| 1 | Richtung Y |
|---|---|
| 2 | Richtung X |
| A* | Säulenzufuhr |
| B* | Säulenabfuhr |

| | | |
|---|---|---|
| C* | Verteilerzufuhr | |
| D* | Verteilerabfuhr | |
| $E_1$-$E_N$ | Eluenten-Eingang | |
| $F_1$-$F_N$ | Feed Schaltventile Die Elemente E und F bilden zusammen die Säulenzufuhr A* | |
| G | Unterteilung der Säule in der radialen Y-Richtung, weiter G-Bereiche genannt | |
| $P^1$-$P^{nsp}$ | Fraktionierventile in die Produktbehälter | |
| R | Ventil + Leitung zum Eluenten-Behälter.<br>Die Elemente P und R bilden zusammen die Säulenabfuhr B* | |
| S* | Säule | |
| K | Verbindung zwischen dem ersten und dem letzen Verteiler, bildet den Kreisstrom, | |
| V* | Verteiler | |
| $V_E$ | letzter Verteiler | |
| $V_A$ | erster Verteiler | |
| v* | Sperrventilen des Verteilers zur Steuerung des Kreisstroms | |
| H | Höhe der Säule | |
| B | Breite der Säule | |
| T | Tiefe der Säule | |
| B' | Breite des Verteilers | |
| T' | Tiefe des Verteilers | |

**Fig. 1:** Basiselemente einer Vorrichtung für das neue Verfahren

**Fig. 2:** Stufenmodell einer chromatographischen Säule

**Fig. 3:** Aufbau des gesamten Systems mit Ventilen

**Fig. 4:** Anschlüsse und Aufbau

**Fig. 5:** Aufbau des Verteilers

**Fig. 6:** Simulation des neues Verfahrens am Beispiel eines Zweistoffgemisches

**Fig. 7:** Prinzip der Trennung eines tertiäres Stoffgemisches

**Fig. 8:** Konzentrationsprofil der Komponenten A,B und C (Studie 1)

**Fig. 9:** Konzentrationsprofil der Komponenten A,B und C (Studie 2)

## Beispiele

### Beispiel 1: Simulation der Trennung einer binären Stoffmischung

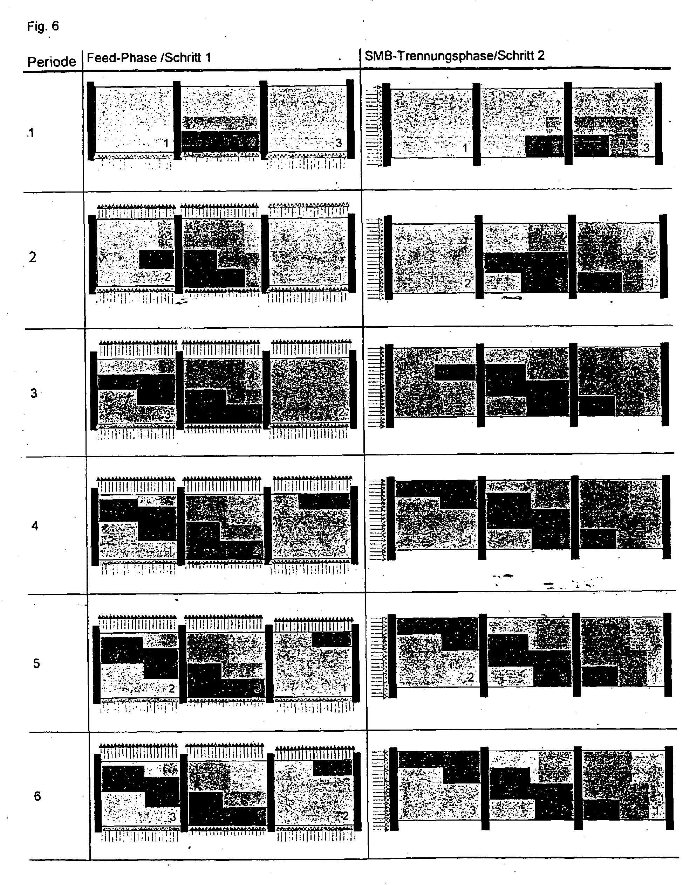

Fig. 6 illustriert die Funktionsweise dieses Verfahrens am Beispiel eines Zweistoffgemisches (A+B). Drei chromatographische Säulen werden hierzu verwendet. Es wird eine lineare Adsorption mit idealem Verhalten angenommen, d.h. ohne Berücksichtigung von Dispersions-, Diffusions- oder sonstigen frontverschmierenden Effekten. Weiterhin wird der Einfachheit halber angenommen, dass die leicht adsorbierbare Komponente (A) doppelt so schnell ist wie die schwer adsorbierbare Komponente (B). Ferner sind die Volumenströme in radialer Y-Richtung über alle Säulen gleich eingestellt (Qy) und betragen die Hälfte des Volumenstromes in axialer X-Richtung ($Q_x$). $Q_x$ wird wiederum so gewählt, dass die schwer adsorbierbare Komponente (B) am Ende des zweiten Schrittes insgesamt eine halbe Säulenlänge weiter gewandert ist. Das so konstruierte Beispiel soll an dieser Stelle nur dem Verständnis der einzelnen Schritte sowie des Gesamtverfahrens dienen.

Man kann in Fig. 6 verfolgen, wie sich die Konzentrationsprofile der Komponenten A und B über die drei chromatographischen Säulen im Laufe von sechs Perioden entwickeln. Bei der ersten Periode (Zeile 1 in Fig. 6) wird das Feed während der Feed-Phase/Schritt 1 auf die zweite Säule aufgegeben. Die Komponente A wandert bis zur Mitte der Säule, während Komponente B ein Viertel der Säule belädt. In der SMB-Trennungsphase/Schritt 2 fließt das Eluent in X-Richtung. Am Ende der ersten Periode befindet sich Komponente A sowohl in X- als auch in Y-Richtung weiter weg von der Komponente B, was das Ergebnis der zweidimensionalen Trennung ist (Zeile 1, Spalte 2, Fig. 6). Für die Periode 2, Schritt 1 wird der Feed nun auf die dritte Säule aufgegeben (Zeile 2, Spalte 1, Fig. 6). In diesem Schritt gewinnt man sowohl am Ausgang der zweiten als auch der dritten Säule die Komponente A. Komponente B benötigt aufgrund ihrer stärkeren Adsorption vier Perioden, um am Ausgang der ersten Säule abgeführt zu werden.

Wie Fig. 6 nun insgesamt zu entnehmen ist, lässt sich das Zweistoffgemisch anhand dieser Einstellungen auftrennen. Beide Komponenten werden getrennt an den jeweiligen oberen Ausgängen (Richtung Y) der Säulen abgeführt. Ähnlich dem konventionellen SMB-Prozess wird auch hier ein zyklisches Gleichgewicht erreicht. In diesem Falle und unter Annahme eines idealen Verhaltens stellt es sich nach genau vier Perioden ein. Es sei an dieser Stelle darauf hingewiesen, dass bei der vorgestellten Simulation lediglich drei chromatographische Säulen eingesetzt wurden, was im Falle des konventionellen SMB-Prozesses nicht möglich gewesen wäre. In diesem neuen Verfahren reichen gar zwei Säulen aus, was jedoch zu Lasten einer niedrigen Produktivität geht.

### Beispiel 2: Trennung einer tertiären Stoffmischung

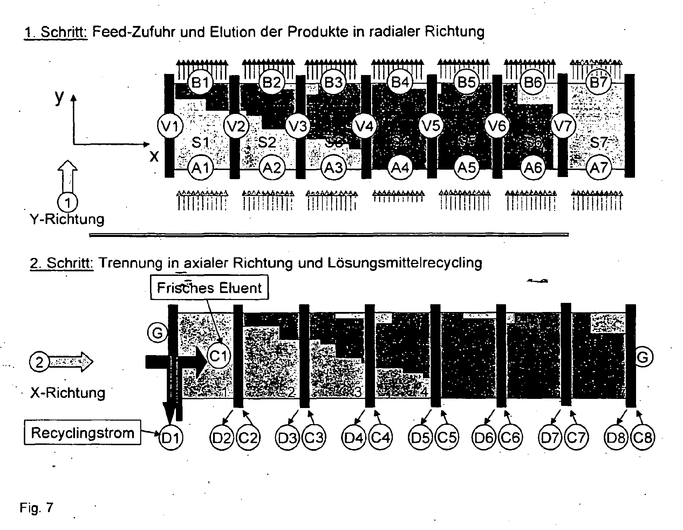

Beim Betrieb dieses neuen Verfahrens unterscheidet man, wie in Fig. 7 am Beispiel einer ternären Stofftrennung mit insgesamt sieben Säulen illustriert wird, zwischen zwei Schritten, die hintereinander ausgeführt werden und eine Periode des Systems bilden. Im ersten Schritt (=Feed Phase) wird in radialer Y-Richtung an einer Stelle ($A_4$) im Kreis Feed und ansonsten den restlichen Säulen ($A_1$-$A_3$, $A_5$-$A_7$) reines Lösungsmittel zugeführt. Die Verteiler ($V_1$-$V_7$) trennen in diesem Schritt die chromatographischen Säulen ($S_1$-$S_7$) voneinander, wodurch der Volumenstrom jeder einzelnen chromatographischen Säule unabhängig voneinander eingestellt werden kann. Die einzelnen Volumenströme werden hierbei so eingestellt, dass die jeweilige Zielkomponente an der jeweiligen Abfuhr ($B_1$-$B_7$) der jeweiligen chromatographischen Säule in der gewünschten Reinheit gewonnen wird. Die richtigen Werte für die Volumenströme werden anhand einer modellbasierten Auslegungsrechnung oder experimentell ermittelt.

Im zweiten Schritt (=SMB Trennungsphase) wird entlang der X-Richtung getrennt, indem frisches Lösungsmittel an einem Verteiler $V_1$ im Kreis durch $C_1$ zugeführt wird. Alle weiteren Verteiler $V_2$-$V_7$ sind in X-Richtung offen. Das gesamte Konzentrationsprofil wird in X-Richtung gefördert. Der Volumenstrom der SMB-Trennung wird so eingestellt, dass am Ende der Periode die mit frischen Eluenten beaufschlagte Säule (hier Säule 1) vollkommen regeneriert wird, d.h. dass nur reines Lösungsmittel die Säule verlässt. An der Verteilerabfuhr D1 können sich zwei Situationen ergeben:

1. entweder tritt reines Lösungsmittel auf, welches recycliert werden kann (Recyclingstrom),

2. oder es treten die am leichtesten adsorbierbaren Komponenten auf, welche in die entsprechenden Produktbehälter geleitet werden.

Ob sich die eine oder andere Betriebsweise ergibt, hängt von der Wahl der Volumenströme sowie, der Adsorptionseigenschaften der zu trennenden Komponenten ab. Ein Mehrkomponenten-Detektor kann optional im Recyclingstrom eingebaut werden, um im Fall des Durchschlags einer unerwünschten Komponente auf Waste schalten zu können.

Sobald der zweite Schritt abgeschlossen ist, ist die Periode zu Ende und es folgt eine neue Periode. Die Zufuhrstellen für Feed und Eluent in radialer Richtung ($A_1$-$A_7$) sowie die Säulenabfuhren ($B_1$-$B_7$) werden eine Säule

weiter in Strömungsrichtung bewegt. Gemäß Fig. 7 wird die Feedzufuhr von A4 auf A5 verschoben. Die Säulenausfuhren werden entsprechend mit den neuen Produktbehältern verbunden. In axialer Richtung wird die Eluentenzufuhr von Verteilerzufuhr $C_1$ auf $C_2$ und die Eluentenabfuhr von Verteilerabfuhr $D_1$ auf $D_2$ verschoben. Durch diese wiederholte Weiterschaltung bildet sich in axialer X-Richtung ein simulierter Gegenstrom zwischen der Feststoffphase und der Flüssigkeit aus.

Dies soll anhand einer ternären Stofftrennung mit den folgenden Stoffeigenschaften illustriert werden.

Folgende Studie wurde mit einer Anlage nach Fig. 4 mit Verteiler nach Fig. 5 durchgeführt.

Stoffeigenschaften eines ternären Gemisches

| Parameter | Wert | Beschreibung |
|---|---|---|
| N [-] | 6 | Anzahl der Säulen |
| $\varepsilon_{ext}$ [-] | 0.4 | Externe Porosität |
| B [cm] | 10 | Horizontale Länge einer Säule |
| H [cm] | 10 | Vertikale Länge einer Säule |
| T [cm] | 2 | Tiefe einer Säule |
| $n_{sp}$ [-] | 3 | Anzahl der Komponenten |
| $c_{fe}$ [g/l] | [2.5,2.5,2.5] | Feedkonzentration |
| A,B | [1e-4, 20] | Van-Deemter Parameter |
| H [-] | [2.0,1.5,1.0] | Henry-Koeffizienten |
| Startfeed | 2 | Position der ersten Feed-Zufuhr |
| Dauer Schritt 1 [s] | siehe Studien | Dauer der Feed-Injektion |
| Dauer Schritt 2 [s] | siehe Studien | Dauer der SMB-Trennung |
| $Q_{hor}$ [ml/min] | siehe Studien | Horizontaler Volumenstrom |
| $Q_{ver}$ [ml/min] | siehe Studien | Vertikaler Volumenstrom |

Die Anzahl der chromatographischen Säulen beträgt sechs. Das erste Feed wird auf die zweite Säule aufgegeben (bei $A_2$). Die Eluentenzufuhr findet im Schritt 2 der Periode 1 (X-Richtung) am Verteiler 1 (durch $C_1$) statt. Freie Betriebsparameter sind die Volumenströme in axialer und radialer Richtung, die in den folgenden Studien variiert werden:

Studie 1: Start-Feed-Position = 5, $Q_{hor}$=15 ml/min, $Q_{ver}$= 15ml/min

Abbildung 6 zeigt das sich ergebende zweidimensionale Konzentrationsprofil für die jeweiligen Komponenten (A,B,C) am Ende der zehnten Periode. Das Feed wurde gerade auf die vorletzte Säule in Position 5 zugeführt. Komponente A ist die am leichtesten adsorbierbare Komponente, C die am stärksten und B die Zwischenkomponente. Die hochkonzentrierten Bereiche sind dunkelrot, während die reine Lösung blau ist. Man erkennt, dass die Komponenten entlang unterschiedlicher Bahnen wandern.

Studie 2: Start-Feed-Position= 3, $Q_{hor}$=25 ml/min, $Q_{ver}$=15ml/min

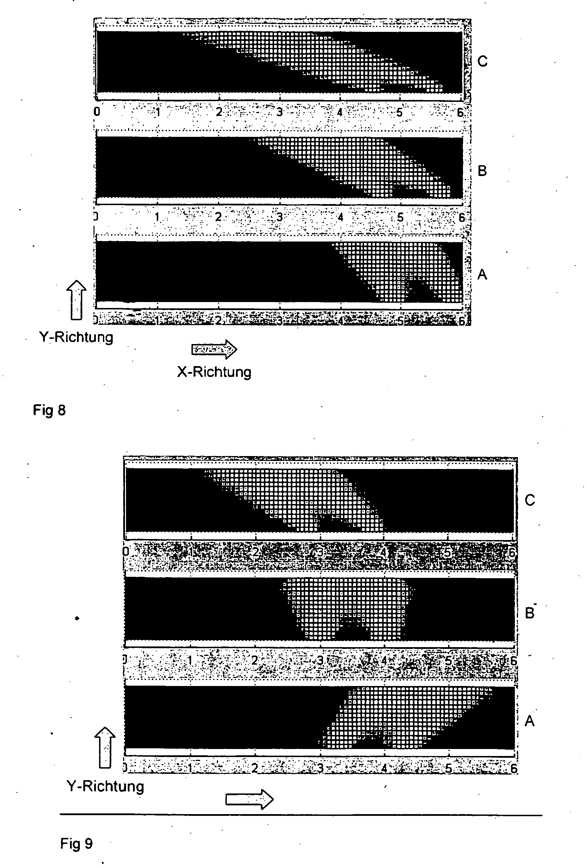

Bei dieser Studie wurde der horizontale Volumenstrom um 10 ml/min erhöht, so dass die Komponenten stärker in axialer X-Richtung getrennt werden. Die Start-Feed-Position wurde gleichzeitig von der fünften auf die dritte Säule verschoben. Die Position der Querbahnen, entlang derer die Komponenten wandern, kann durch diese gezielte Änderung des axialen Volumenstromes und der Feed-Zufuhr-Stelle beeinflusst werden. In dieser Studie ist es gelungen, die Komponenten A und C relativ zur Zufuhr-Stelle jeweils nach rechts oder links wandern zu lassen, während die Zwischenkomponente B einen geradlinigen Weg zum Ausgang findet. Fig. 9 zeigt die stationären Konzentrationsprofile am Ende der zehnten Periode.

**Patentansprüche**

1. Chromatographisches quasi-kontinuierliches Verfahren zur Trennung von binären und Mehrstoffgemischen in einer Anlage, die aus mehreren seriell im Kreis geschalteten Einzelsäulen $S_1$ bis $S_N$ besteht, **dadurch gekennzeichnet, dass** eine zweidimensionale Trennung dadurch erreicht wird, dass,

   a) im Schritt 1 der Periode p, einer Säule $S_m$ der Feed und den anderen Säulen ein Eluentenstrom in Richtung Y zugeführt wird,

b) im Schritt 2 der Periode p, ein Eluentenstrom durch die gebundenen Säulen in Richtung X fließt und einen so genannten Kreisstrom bildet,

c) im Schritt 1 der Periode p+1, der Säule $S_{m+1}$ weiteres Feed und den anderen Säulen weiterer Eluentenstrom in Richtung Y zugeführt wird,

d) im Schritt 2 der Periode p+1, wiederum ein Eluentenstrom durch die gebundenen Säulen in Richtung X fließt und einen so genannten Kreisstrom bildet,

e) sich a) bis d) kontinuierlich wiederholen,

wobei X die Richtung darstellt, in der die Einzelsäulen miteinander verbunden sind und die Richtung Y senkrecht hierzu verläuft.

2. Verfahren nach Anspruch 1, **dadurch gekennzeichnet, dass** im zweiten Schritt an der Verteilerzufuhr $C_j$ eines gegebenen Verteilers $V_n$ frisches Lösungsmittel zugeführt wird und an der Verteilerabfuhr $D_j$ des gleichen Verteilers $V_n$ der Kreisstrom abgeführt wird.

3. Verfahren nach Anspruch 1 oder 2, **dadurch gekennzeichnet, dass** die getrennte Komponente in einem semikontinuierlichen Prozess an der Säulenabfuhr $B^*$ und eventuell zusätzlich an der Verteilerabfuhr $D_n$ in der axialen Richtung X gewonnen wird.

4. Verfahren nach einem der Ansprüche 1 bis 3, **dadurch gekennzeichnet, dass** der Kreisstrom so eingestellt wird, dass am Ende jeder Periode die Säule $S_N$ vollkommen regeneriert wird.

5. Vorrichtung zur chromatographischen Trennung von binären und Mehrstoffgemischen, **dadurch gekennzeichnet, dass** mindestens 2 chromatographische Säulen ($S^*$) seriell im Kreis geschaltet sind, und dass jede Säule auf einer parallel zur seriellen Schaltungsrichtung X verlaufenden ersten Seite eine Säulenzufuhr ($A^*$), auf einer der ersten Seite gegenüberliegenden zweiten Seite eine Säulenabfuhr ($B^*$) aufweist, und dass jede Säule mit einem Verteiler ($V^*$), der eine Verteilerzufuhr ($C^*$) und eine Verteilerabfuhr ($D^*$) aufweist, in der Richtung X mit der Nachbarsäule verbunden ist.

6. Vorrichtung nach Anspruch 5, **dadurch gekennzeichnet, dass** die Säule $S^*$ eine quadratische oder Teilring-Form aufweist.

7. Vorrichtung nach einem der Ansprüche 5 oder 6, **dadurch gekennzeichnet, dass** jede Säule $S^*$ entlang der zur Richtung X senkrechten Richtung Y in äquidistante bzw. in graduell feinere G-Bereiche aufgeteilt wird, wobei jeder G-Bereich g der Säule $S_m$ durch den Verteiler $V^*$ mit dem G-Bereich g der Säule $S_{m+1}$ verbunden ist.

8. Vorrichtung nach einem der Ansprüche 5 bis 7, **dadurch gekennzeichnet, dass** der Verteiler $V^*$ aus einer Kombination von Sperrventilen besteht.

9. Vorrichtung nach einem der Ansprüche 5 bis 8, **dadurch gekennzeichnet, dass** der Verteiler $V^*$ aus einem Grundkörper (1) besteht, der Wege für den Eluenten, die mit der Öffnung (3) verbunden sind, und in axial X-gerichtete Kanäle (4), die mit einem rotierenden Zylinder (2) auf und zu gemacht werden, aufweist.

**Claims**

1. Chromatographic quasi-continuous process for separating binary and multisubstance mixtures in a unit which consists of a plurality of individual columns $S_1$ to $S_N$ connected in series in a circuit, **characterized in that** a two-dimensional separation is achieved by

a) in step 1 of the period p, supplying the feed to a column $S_m$ and supplying an eluent stream in direction Y to the other columns,

b) in step 2 of the period p, flowing an eluent stream through the bonded columns in direction X and forming a circulation stream,

c) in step 1 of the period p+1, supplying further feed to the column $S_{m+1}$ and supplying further eluent stream in direction Y to the other columns,

d) in step 2 of the period p+1, again flowing an eluent stream through the bonded columns in direction X and forming a circulation stream,

e) repeating a) to d) continuously,

representing the direction in which the individual columns are connected to one another and the direction Y running at right angles thereto.

2. Process according to Claim 1, **characterized in that**, in the second step, fresh solvent is supplied at the distributor inlet $C_j$ of a given distributor $V_n$, and the circulation stream is removed at the distributor outlet $_{Dj}$ of the same distributor $V_n$.

3. Process according to Claim 1 or 2, **characterized in that** the separated component is obtained in a semicontinuous process at the column outlet B* and possibly additionally at the distributor outlet $D_n$ in the axial direction X.

4. Process according to one of Claims 1 to 3, **characterized in that** the circulation stream is established such that the column $S_N$ is regenerated completely at the end of each period.

5. Apparatus for chromatographic separation of binary and multisubstance mixtures, **characterized in that** at least two chromatographic columns (S*) are connected in series in a circuit, and **in that** each column has a column inlet (A*) on a first side running parallel to the series circuit direction X and a column outlet (B*) on a second side located opposite the first side, and **in that** each column is connected to the neighboring column in the direction X by a distributor (V*) which has a distributor inlet (C*) and a distributor outlet (D*).

6. Apparatus according to Claim 5, **characterized in that** the column S* has a square or partial ring shape.

7. Apparatus according to either of Claims 5 and 6, **characterized in that** each column S* is divided into equidistant or into gradually finer G regions along the direction Y at right angles to the direction X, each G region g of the column $S_m$ being bonded to the G region g of the column $S_{m+1}$ through the distributor V*.

8. Apparatus according to one of Claims 5 to 7, **characterized in that** the distributor V* consists of a combination of barrier valves.

9. Apparatus according to one of Claims 5 to 8, **characterized in that** the distributor V* consists of a base body (1) which has paths for the eluents which are connected to the orifice (3), and has channels (4) which are aligned in the axial X direction and are opened and closed by a rotating cylinder (2).

**Revendications**

1. Procédé chromatographique quasi-continu pour la séparation de mélanges binaires et de plus de deux composants dans une installation constituée par plusieurs colonnes individuelles $S_1$ à $S_N$ connectées en série en circuit, **caractérisé en ce qu'**une séparation bidimensionnelle est obtenue par les étapes suivantes :

a) lors de l'étape 1 de la période p, l'alimentation est introduite dans une colonne $S_m$ et un courant d'éluant est introduit dans la direction Y dans les autres colonnes,
b) lors de l'étape 2 de la période p, un courant d'éluant s'écoule dans la direction X dans les colonnes reliées et un courant dit circulaire se forme,
c) lors de l'étape 1 de la période p+1, davantage d'alimentation est introduite dans la colonne $S_{m+1}$ et davantage de courant d'éluant est introduit dans la direction Y dans les autres colonnes,
d) lors de l'étape 2 de la période p+1, un courant d'éluant s'écoule de nouveau dans la direction X dans les colonnes reliées et un courant dit circulaire se forme,
e) a) à d) sont répétés en continu,

X étant la direction dans laquelle les colonnes individuelles sont reliées les unes avec les autres et la direction Y étant perpendiculaire à celle-ci.

2. Procédé selon la revendication 1, **caractérisé en ce que** du solvant frais est introduit lors de la deuxième étape dans l'entrée de distributeur $C_j$ d'un distributeur $V_n$ donné et le courant circulaire est déchargé de la sortie de distributeur $D_j$ du même distributeur $V_n$.

**3.** Procédé selon la revendication 1 ou 2, **caractérisé en ce que** le composant séparé est récupéré dans le cadre d'un procédé semi-continu à la sortie de colonne B* et éventuellement également à la sortie de distributeur $D_n$ dans la direction axiale X.

**4.** Procédé selon l'une quelconque des revendications 1 à 3, **caractérisé en ce que** le courant circulaire est ajusté de manière à ce que la colonne $S_N$ soit complètement régénérée à la fin de chaque période.

**5.** Dispositif pour la séparation chromatographique de mélanges binaires et de plus de deux composants, **caractérisé en ce qu'**au moins 2 colonnes chromatographiques (S*) sont connectées en série en circuit, et **en ce que** chaque colonne comprend une entrée de colonne (A*) sur un premier côté parallèle à la direction de connexion en série X et une sortie de colonne (B*) sur un second côté opposé au premier côté, et **en ce que** chaque colonne est connectée avec un distributeur (V*), qui comprend une entrée de distributeur (C*) et une sortie de distributeur (D*), dans la direction X avec la colonne voisine.

**6.** Dispositif selon la revendication 5, **caractérisé en ce que** la colonne S* présente une forme quadratique ou d'anneau partiel.

**7.** Dispositif selon l'une quelconque des revendications 5 ou 6, **caractérisé en ce que** chaque colonne S* est divisée le long de la direction Y perpendiculaire à la direction X en zones G équidistantes ou graduellement plus fines, chaque zone G g de la colonne $S_m$ étant reliée par le distributeur $V^*$ avec la zone G g de la colonne $S_{m+1}$.

**8.** Dispositif selon l'une quelconque des revendications 5 à 7, **caractérisé en ce que** le distributeur V* est constitué d'une combinaison de soupapes d'arrêt.

**9.** Dispositif selon l'une quelconque des revendications 5 à 8, **caractérisé en ce que** le distributeur V* est constitué d'un corps de base (1), qui comprend des voies pour les éluants, qui sont reliées avec l'ouverture (3), et des canaux (4) orientés dans la direction X axiale, qui sont ouverts et fermés avec un cylindre rotatif (2).

Fig. 1

Fig.2

Fig. 3

Fig. 4

Fig 5

Fig. 6

| Periode | Feed-Phase /Schritt 1 | SMB-Trennungsphase/Schritt 2 |
|---|---|---|
| 1 | | |
| 2 | | |
| 3 | | |
| 4 | | |
| 5 | | |
| 6 | | |

1. Schritt: Feed-Zufuhr und Elution der Produkte in radialer Richtung

2. Schritt: Trennung in axialer Richtung und Lösungsmittelrecycling

Fig. 7

C

0 1 2 3 4 5 6

B

0 1 2 3 4 5 6

A

0 1 2 3 4 5 6

Y-Richtung

X-Richtung

Fig 8

C

0 1 2 3 4 5 6

B

0 1 2 3 4 5 6

A

0 1 2 3 4 5 6

Y-Richtung

Fig 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2621149 B
- US 2985589 B
- US 6712973 B
- US 5102553 B
- US 6602420 B
- US 6805799 B
- US 5139680 A


**In der Beschreibung aufgeführte Nicht-Patentliteratur**

- **M. JUZA ; M. MAZZOTTI ; M. MORBIDELLI.** *Trends in Biotechnology,* 2000, vol. 18, 108-118
- **S. IMAMOGLU.** *Advances in Biochemical Engineering/Biotechnology,* 2002, vol. 76, 211-231
- **M. SCHULTE ; J. STRUBE.** *Journal of Chromatography A,* 2001, vol. 906, 399-416
- **B. CLAY.** *Chemical Market Report,* 2001, vol. 259, 15
- **M. NEGAWA ; F. SHOJI.** *Journal of Chromatography,* 1992, vol. 590, 113-117
- **KANN. H. SCHRAMM ; M. KASPEREIT ; A. SEIDEL-MORGENSTERN.** *Journal of Chromatography A,* 2003, vol. 1006, 77-86
- **D. COSTESSON ; G. REARICK ; M. KEARNE.** *Zuckerindustrie,* 2000, vol. 125, 333-335
- **F. LUTIN ; M. BAILLY ; D. BAR.** *Desaltination,* 2002, vol. 148, 121-124
- **S. BAUDOUIN ; X. LANCRENON.** *Industries Alimentaires et Agricoles,* 2003, vol. 120, 42-48
- **FINKE et al.** *J. Agric. Food Chem.,* 2002, vol. 50, 185-201
- **F. HILBRIG.** *Journal of Chromatography B,* 2003, vol. 790, 1-17
- **GUIOCHON, G.** *Journal of Chromatography A,* 2002, vol. 965, 129-161
- **LUDEMANN-HOMBOURGER, O. ; NICOUD, R.-M.** *Separation Science and Technology,* 2000, vol. 35, 1829-1862